# EUROPEAN PATENT SPECIFICATION

(11) **EP 4 320 479 B1**
(45) Date of publication and mention of the grant of the patent: **24.09.2025**
(21) Application number: 22711108.5
(22) Date of filing: 15.03.2022
(51) Int. Cl.: G02F 1/35, G02F 1/31, G02F 1/355, G02B 26/00, G02F 1/01

(54) **LIGHT SOURCE, MEMS OPTICAL SWITCH, SENSOR AND METHODS FOR MANUFACTURING THE SAME**
LICHTQUELLE, OPTISCHER MEMS-SCHALTER, SENSOR UND VERFAHREN ZUR HERSTELLUNG DAVON
SOURCE DE LUMIÈRE, COMMUTATEUR OPTIQUE MEMS, CAPTEUR ET LEURS PROCÉDÉS DE FABRICATION

(30) Priority: 09.04.2021 NL 2027948
(43) Date of publication of application: 14.02.2024
(73) Proprietor: UNIVERSITEIT TWENTE, 7522 NB Enschede (NL)
(72) Inventor: BERENSCHOT, Johan Willem, 7522 NB Enschede (NL); GARCIA BLANCO, Sonia Maria, 7522 NB Enschede (NL); MARTINUSSEN,, Simen Mikalsen, 7522 NB Enschede (NL); TAS, Niels Roelof, 7522 NB Enschede (NL); TIGGELAAR, Roald Michel, 7522 NB Enschede (NL)
(74) Representative: Arnold & Siedsma
(86) International application number: PCT/NL2022/050140
(87) International publication number: WO 2022/216150

(56) References cited:
- CN-A- 111 864 535
- FRIGG ANDREAS ET AL: "Optical frequency comb generation with low temperature reactive sputtered silicon nitride waveguides", APL PHOTONICS, AMERICAN INSTITUTE OF PHYSICS, 2 HUNTINGTON QUADRANGLE, MELVILLE, NY 11747, vol. 5, no. 1, 22 January 2020 (2020-01-22), XP012243998, DOI: 10.1063/1.5136270
- CHAO SZU-HAN ET AL: "Novel patterned sapphire substrates for enhancing the efficiency of GaN-based light-emitting diodes", RSC ADVANCES, vol. 10, no. 28, 24 April 2020 (2020-04-24), GB, pages 16284 - 16290, XP055856692, ISSN: 2046-2069, DOI: 10.1039/D0RA01900C
- TIAN HAO ET AL: "An unreleased MEMS actuated silicon nitride resonator with bidirectional tuning", 2018 CONFERENCE ON LASERS AND ELECTRO-OPTICS (CLEO), OSA, 13 May 2018 (2018-05-13), pages 1 - 2, XP033382256
- MU JINFENG ET AL: "Monolithic Integration of Al2O3 and Si3N4 Toward Double-Layer Active-Passive Platform", IEEE JOURNAL OF SELECTED TOPICS IN QUANTUM ELECTRONICS, IEEE, USA, vol. 25, no. 5, 1 September 2019 (2019-09-01), pages 1 - 11, XP011729294, ISSN: 1077-260X, [retrieved on 20190610], DOI: 10.1109/JSTQE.2019.2908559
- SU ZHAN ET AL: "High-Q-factor Al 2 O 3 micro-trench cavities integrated with silicon nitride waveguides on silicon", vol. 26, no. 9, 30 April 2018 (2018-04-30), pages 11161, XP055856575, Retrieved from the Internet <URL:https://pdfs.semanticscholar.org/797c/e25f793487c73de0269889b65f1495448f64.pdf> DOI: 10.1364/OE.26.011161

## Description

The present invention relates to a light source for generating an optical frequency comb. The present invention further relates to a method for manufacturing the optical resonator used in this light source. The present invention additionally relates to microelectromechanical systems, MEMS, optical switch and system comprising the same. The present invention also relates to a sensor and to a method for manufacturing a suspended silicon nitride structure comprised in the sensor.

Light sources for generating an optical frequency comb known in the art comprise an optical resonator and a laser source. The optical resonator comprises a substrate on which a closed-loop waveguide is either directly or indirectly deposited. The closed-loop waveguide is optically coupled to an input waveguide and an output waveguide, which are equally arranged on the substrate. The laser source is configured for transmitting a beam of coherent light into the input waveguide.

Optical resonators of the type described above are among the most common and versatile building blocks in integrated non-linear optical circuits. The fundamental design consists of a waveguide looped back on itself, and which is optically coupled to an input and output waveguide of the resonator. The closed-loop waveguide forms an optical cavity. The shape and size of the cavity define one or more resonant frequencies and corresponding resonant wavelengths. If light is received by the resonator that has this resonant frequency/wavelength, it will circulate through this cavity thereby accumulating optical energy inside the cavity. This accumulation of optical energy is exploited to allow the use of low-power laser sources, specifically pump laser sources, for phenomena that normally need high intensities, such as generating an optical frequency comb.

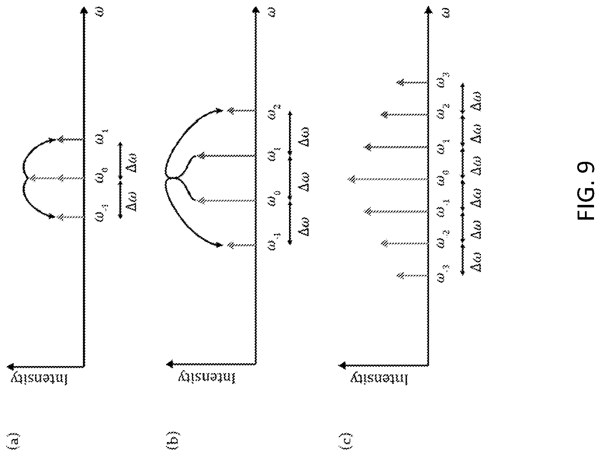

Optical resonators may be used to generate frequency combs as they allow for four-wave mixing, FWM. Four-wave mixing is a process occurring in a non-linear optical medium by which two photons are annihilated and two new photons are created. Figure 9A illustrates degenerate FWM, where the two annihilated photons are of identical energy, whereas figure 9B shows non-degenerate FWM with photons of unequal energy. Because FWM is subject to conservation of energy without loss to the material, the energy splitting needs to be symmetric in both cases. The modes will be approximately equally spaced in a resonator with low integrated dispersion, as shown in figure 9C. When FWM occurs in an optical cavity as the earlier discussed closed-loop waveguide, FWM will fill most of, or all of the cavity modes in the wavelength range experiencing anomalous dispersion, creating a frequency comb.

A well known non-linear effect occurring inside optical materials is the Kerr effect, also called the quadratic electro-optic effect. This effect corresponds to a change in the refractive index of the optical material in response to an applied electric field. In optical resonators, the applied electric field originates from the light itself. Consequently, when sufficient optical energy is inside the optical resonator, the optical material will behave in a non-linear manner, for example due to the Kerr effect or other non-linear effects, and a frequency comb will be generated in correspondence with the abovementioned four-wave mixing process. When the frequency comb is generated mainly due to the occurrence of the Kerr effect, the frequency comb is referred to as a Kerr frequency comb.

Well known light sources that are used to generate optical frequency combs use silicon nitride waveguides deposited on a silicon substrate, and, more specifically, deposited on a silicon oxide cladding present in between the waveguide and the silicon substrate. Such sources are generally suitable for generating optical frequency combs in the near infrared spectrum, or, alternatively, between approximately 800 nm and 2500 nm. The combination of a silicon nitride waveguide deposited on silicon oxide is considered very suitable for this application because of the large refractive index contrast between the two materials enabling sufficient optical confinement of the light within the silicon nitride. However, generating optical frequency combs in a lower frequency spectrum has not yet been achieved.

It is an object of the application to provide a more versatile light source for generating an optical frequency comb over a larger frequency range. It is a further object to provide a light source for generating an optical frequency comb at larger wavelengths. More specifically, it is an object to provide a light source that can generate an optical frequency comb for wavelengths in the visible light spectrum, which ranges from approximately 380 nm up to approximately 800 nm wavelength, the near-infra red spectrum, which ranges from approximately 800 nm up to approximately 2500 nm wavelength, as well as wavelengths in the fundamental infra-red spectrum, which ranges from 2500 nm up to 5000 nm wavelength. This should be achieved without jeopardizing optical performance of the optical resonator.

FRIGG ANDREAS ET AL: "Optical frequency comb generation with low temperature reactive sputtered silicon nitride waveguides",APL PHOTONICS, AMERICAN INSTITUTE OF PHYSICS, 2 HUNTINGTON QUADRANGLE, MELVILLE, NY 11747, deel 5, no. 1, 22 January 2020 (2020-01-22), XP012243998 discloses a prior art light source for generating an optical frequency comb.

TIAN HAO ET AL: "An unreleased MEMS actuated silicon nitride resonator with bidirectional tuning",2018 CONFERENCE ON LASERS AND ELECTRO-OPTICS (CLEO), OSA, 13 May 2018 (2018-05-13), pages 1-2, XP033382256 discloses a prior art MEMS switch.

SU ZHAN ET AL: "High-Q-factor Al 2 O 3 micro-trench cavities integrated with silicon nitride waveguides on silicon",OPTICS EXPRESS, Volume 26, nr. 9, 30 April 2018 (2018-04-30), page 11161, XP055856575 discloses a prior art method for manufacturing a suspended silicon nitride structure.

The present invention achieves these objects by providing a light source for generating an optical frequency comb as defined in claim 1. This light source comprises an optical resonator. The optical resonator comprises a mono-crystalline aluminum oxide substrate, an input waveguide, an output waveguide, and a closed-loop waveguide. The closed-loop waveguide is arranged on the substrate, and is optically coupled to the input waveguide and output waveguide. The closed-loop waveguide is configured for receiving at least a part of a beam of light from the input waveguide, for accumulating optical energy inside the closed-loop waveguide using the received beam of light, for generating an optical frequency comb using the accumulated optical energy, for example using the four-wave mixing process, and for coupling at least a part of the generated optical frequency comb to the output waveguide. The closed-loop waveguide is a monolithic silicon nitride waveguide having a thickness of 500 nm or more, and which is deposited on the substrate.

The Applicant realized that a silicon nitride waveguide deposited on a silicon oxide cladding cannot reliably guide light having a wavelength of more than approximately 3 um. This can be attributed to the high absorption of optical energy inside the cladding for these wavelengths.

Additionally, the Applicant realized that non-linear optical phenomena in silicon nitride waveguides on a silicon substrate or a silicon oxide cladding, for example due to the Kerr effect, cannot be reliably achieved at greater wavelengths. Consequently, the FWM process will not or hardly generate a frequency comb at these wavelengths.

In the art, fabricating a silicon nitride layer using a chemical vapor deposition process is considered limited to layers of 400 nm thick at a time. Depositing layers of silicon nitride on silicon and/or silicon oxide cladding thicker than 400 nm was shown to result in waveguides and/or silicon nitride layers prone to cracking. The Applicant realized that this occurs due to high residual stress caused by a large mismatch between the coefficients of thermal expansion of silicon nitride and the underlying silicon substrate. Regardless, to achieve anomalous dispersion or other non-linear optical phenomena at 1550 nm wavelength in a silicon nitride waveguide, the thickness required is already around 700 nm. When the abovementioned anomalous dispersion is required at even greater wavelengths, an even thicker layer of silicon nitride would be required.

A number of methods are known in the art that allow for fabricating a silicon nitride waveguide on silicon having the required thickness. For example, a multi-deposition process can be used in which relatively thin silicon nitride layers are grown after each other, allowing each layer to cool down before a next layer is deposited. A further known method for growing relatively thick silicon nitride layers is the so called damascene process.

Each of the known methods for fabricating a silicon nitride waveguide on silicon or silicon oxide cladding unfortunately results in interfaces inside of the waveguide. Such interfaces are detrimental to the optical performance of a waveguide and introduce losses. Therefore, waveguides fabricated by these methods and having a thickness required for anomalous dispersion at wavelengths greater than 1550 nm, if even possible, will have a relatively large number of internal interfaces and, consequently, diminish optical performance. This problem is in addition to the high absorption of optical energy in the cladding at these relatively long wavelengths.

The object of the present invention is at least partially achieved in the light source according to the present invention. The mono-crystalline aluminum oxide has a lower absorption coefficient than silicon oxide at comparable wavelengths, in particular for wavelengths in the visible spectrum, near IR spectrum, and/or fundamental IR spectrum. However, the Applicant realized that the refractive index contrast between silicon nitride and mono-crystalline aluminum oxide is smaller than the refractive index contrast between silicon nitride and silicon oxide. Therefore, silicon nitride waveguides of a similar size, when deposited on a mono-crystalline aluminum oxide substrate, will show less optical confinement than when deposited on silicon oxide cladding. Consequently, to achieve similar optical confinement, a thicker waveguide is required. This requirement comes on top of the earlier discussed requirement that for anomalous dispersion at greater wavelengths, thicker waveguides are required.

To achieve this, the Applicant has disregarded the belief in the art that the thickness of a monolithic silicon nitride layer is limited to 400 nm. Instead, the Applicant has realized that using a mono-crystalline aluminum oxide substrate, silicon nitride layers can be deposited that show very little residual stress at room temperature. Therefore, when using a mono-crystalline aluminum oxide substrate, relatively thick silicon nitride layers can be deposited with little to no risk of introducing cracking or detachment of the silicon nitride layer. Consequently, monolithic silicon nitride waveguides, when deposited on this substrate, can be reliably fabricated with a thickness at least 500 nm.

It should be noted that within the context of this application, a waveguide or any other body made of the material that such a waveguide can be made of is said to be monolithic when the entire waveguide comprises one continuous region of a particular material. According to the present invention, the monolithic silicon nitride can be made using a single-step low pressure chemical vapor deposition process. This is contrary to the abovementioned multi-deposition processes in which multiple regions of silicon nitride can be identified, for example by interfaces between these regions being visible using electron microscopy. Other processes, like the known damascene process, also do not result in a monolithic silicon nitride layer as interfaces can still be identified inside the material.

The light source may further comprise a laser source for transmitting a beam of light into the input waveguide. Preferably, this laser source is a continuous-wave laser.

The laser source may be configured to generate a light beam at a first frequency. Furthermore, the closed-loop waveguide may be configured to generate the frequency comb to have equidistantly arranged frequency components around the first frequency.

The closed-loop waveguide may be configured to generate a Kerr optical frequency comb.

The silicon nitride waveguide may have a thickness of 750 nm or more, preferably 1 um or more, and more preferably 1.5 um or more. As mentioned earlier, to achieve anomalous dispersion for increasingly greater wavelengths and/or for providing sufficient optical confinement for light having such wavelengths, waveguides of increasing thicknesses are required. As mentioned before, by using the combination of a monolithic silicon nitride layer and a mono-crystalline aluminum oxide such thicknesses are achievable.

The silicon nitride waveguide preferably comprises a Si_{X}N_{Y} layer, wherein 0.71 <= (X/Y) <= 0.76. Stoichiometric silicon nitride may be used for which X=3 and Y=4.

The mono-crystalline aluminum oxide substrate may comprise a sapphire substrate, α-Al₂O₃, although other crystalline forms of aluminum oxide are not excluded. Instead of being directly deposited onto the substrate, the silicon nitride waveguide may be deposited on an intermediate layer between the silicon nitride waveguide and the substrate. It should be noted that the intermediate layer may have been patterned before depositing the Si_{X}N_{Y} layer. A thickness ratio between a thickness of the mono-crystalline aluminum oxide substrate and the intermediate layer preferably exceeds 100:1, and more preferably 1000: 1. Such intermediate layers can have a number of useful properties known to the skilled person and the thickness ratio ensures that the intermediate layer has little to no effect on the residual stress build up in the silicon nitride layer after deposition and cooling down.

The closed-loop waveguide, the input waveguide and/or the output waveguide, can all be a ridge waveguides. Using such waveguides is preferred as alternatives commonly require additional processing steps such as patterning of substrates or layers on the substrate, e.g. etching trenches, and fabricating such patterns for this purpose can be complicated and/or costly.

At least one, and preferably all, of the input waveguide and the output waveguide is a silicon nitride waveguide formed during the same process as the silicon nitride waveguide of the closed-loop waveguide. More in particular, the input and output waveguide may have an identical thickness and material composition.

A plethora of configurations is possible for the earlier indicated input and output waveguides. For example, the input waveguide and the output waveguide can be part of a same waveguide. In other embodiments, the input waveguide and the output waveguide are arranged on different and preferably opposite sides of the closed-loop waveguide.

According to another aspect, the present invention provides a method for manufacturing the abovementioned optical resonator. The method comprises the steps of providing a mono-crystalline aluminum oxide substrate, depositing a silicon nitride film of at least 500 nm thick on the substrate in a single-step low-pressure chemical vapor deposition, LPCVD, process at a temperature between 750 and 950 ⁰C, providing a masking layer on top of the deposited silicon nitride film, patterning the masking layer, and etching the silicon nitride film using the patterned masking layer to thereby form at least, and preferably all, the closed-loop waveguide among the input waveguide, output waveguide, and closed-loop waveguide.

The Applicant has realized that the abovementioned process is not limited to the manufacturing of optical resonators. Instead, a general silicon nitride structure, such as a waveguide, can be realized on a mono-crystalline aluminum oxide substrate in the manner described above. More in particular, in the abovementioned process only the last step needs to be modified during which the shape of the silicon nitride structure is defined.

The deposited silicon nitride layer may have a thickness of 750 nm or more, preferably 1 um or more, and more preferably 1.5 um or more. Additionally or alternatively, the silicon nitride layer, Si_{X}N_{Y}, may have a composition in which 0.71 <= (X/Y) <= 0.76, preferably 0.75, and/or the mono-crystalline aluminum oxide substrate may comprise a sapphire substrate.

The Applicant has found that a monolithic silicon nitride waveguide having a thickness of 500 nm or more can be realized having a surprisingly low stress at room temperatures in any optical circuit element that comprises a mono-crystalline aluminum oxide substrate on which the silicon nitride waveguide is deposited. The Applicant further realized that such a low stress monolithic silicon nitride layer also provides significant advantages in microelectromechanical systems, MEMS.

The present invention therefore also relates to a microelectromechanical system, MEMS, optical switch, as defined in claim 19.

According to the present invention, the optical switch comprises a mono-crystalline aluminum oxide substrate, and a monolithic silicon nitride optical waveguide having a thickness of 500 nm or more that is deposited on the substrate. This optical waveguide comprises a base part that is deposited onto the substrate, preferably directly, and that is configured to receive a beam of light. The optical waveguide further comprises a suspended part having a first end at which the suspended part is integrally connected to the base part and a second end configured to emit said beam of light.

The optical switch further comprises a light reception unit that comprises an optical waveguide, and an actuator configured for displacing the second end relative to the light reception unit in response to an actuation signal to allow or prevent the light beam emitted by the second end to enter the optical waveguide of the light reception unit.

Due to the low stress inside the monolithic silicon nitride when grown on a mono-crystalline aluminum oxide substrate, it becomes possible to realize suspended waveguides or parts thereof which do not present any significant bending. As such, these waveguides can be more reliably used for constructing moveable elements inside a MEMS device, such as the abovementioned suspended part.

The light reception unit may comprise a plurality of optical waveguides, wherein the actuator can be configured to, in response to the actuation signal, select one optical waveguide among the plurality of optical waveguides in which the light beam emitted by the second end is allowed to enter. Accordingly, the present invention allows the realization of a 1 x n optical switch having one input and n outputs.

The actuator can be configured to bend the suspended part in response to the actuation signal. In an embodiment, most of the bending occurs at the position at which the suspended part is connected to the base part. Furthermore, the actuator can be configured to bend the suspended part thereby displacing the second end in a direction parallel to the substrate and/or in a direction perpendicular to the substrate. The thickness and width of the silicon nitride waveguide may be chosen in accordance with the desired movement. For example, increasing the thickness of the silicon nitride waveguide would increase the mechanical stiffness with respect to bending in a direction perpendicular to the substrate.

The silicon nitride optical waveguide may be configured to guide light at a wavelength between 400 nm and 5500 nm. Additionally or alternatively, the silicon nitride waveguide may have a thickness of at least 750 nm, more preferably at least 1 um, and even more preferably at least 1.5 um. The silicon nitride waveguide may be a ridge waveguide of which the corresponding silicon nitride layer, Si_{X}N_{Y}, has a composition in which 0.71 <= (X/Y) <= 0.76, more preferably X=3 and Y=4, the latter composition corresponding to stoichiometric silicon nitride.

Each optical waveguide of the light reception unit may comprise a receiving silicon nitride optical waveguide that was formed during the same process as the silicon nitride optical waveguide. More in particular, the composition and thicknesses of these waveguides can be identical.

The suspended part may comprise a first part at least partially extending away from the substrate between the first end and a third end, wherein the first end is integrally connected to the base part. The suspended part may further comprise a second part extending substantially parallel to the substrate between a fourth end and the second end, wherein the fourth end is integrally connected to the third end.

The actuator can be an electrostatic actuator comprising a non-suspended electrode that is fixedly connected to the substrate and a suspended electrode. Here, a spacing between the suspended electrode and the non-suspended electrode can be changed by applying an electrical actuation signal to the electrodes. Furthermore, the suspended electrode is mechanically coupled to the suspended part such that movement between the non-suspended and suspended electrodes is transferred into a movement of the suspended part.

The suspended electrode and the non-suspended electrode can each be formed using one or more conductive layers, such as one or more metal layers. The one or more conductive layers of the suspended electrode can be formed on the suspended part. In this case, the optical switch may further comprise a cladding layer arranged in between the silicon nitride optical waveguide of the suspended part and the one or more conductive layer(s) of the suspended electrode. Alternatively, the optical switch may comprise a supporting beam that mechanically couples the suspended electrode to the suspended part.

The optical switch may further comprise suspended springs having one end fixedly connected to the substrate and another end to the suspended electrode. Additionally or alternatively, the springs and/or supporting beam can each be formed using the same silicon nitride layer as the silicon nitride layer used for forming the silicon nitride optical waveguide. More in particular, the thickness and composition of these layers can be identical.

According to a further aspect, the present invention further provides a system comprising the MEMs optical switch as described above, and a laser source configured to generate a laser beam and mutually arranged with the MEMs optical switch such that the generated beam enters the base part of the silicon nitride waveguide.

According to a further aspect, the present invention further provides a sensor. According to the present invention, the sensor comprises a mono-crystalline aluminum oxide substrate, a sensing member comprising a suspended silicon nitride structure having at least one end fixedly connected to the substrate, and a sensing unit for sensing a bending of the sensing member. The suspended silicon nitride structure is realized using the deposition of a monolithic silicon nitride film on the substrate, wherein the silicon nitride film has a thickness of 500 nm or more. Preferably, the mono-crystalline aluminum oxide substrate comprises a sapphire substrate.

The sensor may further comprise a capturing agent or coating layer for capturing specific particles and/or molecules of at least 100 Dalton, such as particular proteins, DNA, ionic compounds, bacteria, or virii. For example, the sensor may be configured to detect the presence of virus particles or bacteria. More in particular, if the virus particles or bacteria adhere to the coating layer thereby increasing the weight of the sensing member, the sensing member will bend. Such bending can subsequently be detected by the sensing unit, thereby demonstrating the presence of the virus particles or bacteria.

The sensor may further comprise a first body and a second body spaced apart from the first body, wherein the first and second body are each made of a sacrificial layer. Here, a sacrificial layer is a layer that has been etched away, at least for a large part, for allowing upper lying structures to become suspended, for example suspended in air. In addition, a suspended structure is not supported in a direction towards the substrate by a layer. Such structure can be fixedly attached at one point to the substrate, for example with cantilevers, or can be fixedly attached to the substrate at multiple points.

The sensing member may comprise a first and second base part arranged on the first and second body, respectively. The suspended part may extend between the first and second base parts.

Only a segment of the first and second base parts can be arranged on the first and second bodies, respectively. A remaining segment of the first and second base parts can be arranged directly on the substrate.

Alternatively, the sensor may comprise one of a recess in or a through hole through the substrate arranged underneath the suspended silicon nitride structure.

The suspended silicon nitride structure can be one of a straight or curved beam or waveguide, a spiral structure, or a membrane.

The sensor may further comprise an input waveguide arranged on the substrate and extending between a first end and a dividing end, and an output waveguide arranged on the substrate and extending between a combining end and a second end. The sensor may further include a reference waveguide arranged on the substrate and having one end thereof connected, preferably integrally, to the dividing end of the input waveguide and an other end thereof connected, preferably integrally, to the combining end of the output waveguide. In this case the sensing member may comprise a first waveguide segment arranged on the substrate and having one end thereof connected, preferably integrally, to the dividing end of the input waveguide and an other end thereof connected, preferably integrally, to an end of the suspended silicon nitride structure. The sensing member may additionally comprise a second waveguide segment arranged on the substrate and having one end thereof connected, preferably integrally, to the combining end of the output waveguide and an other end thereof connected, preferably integrally, to an opposing end of the suspended silicon nitride structure. Here, the suspended silicon nitride structure comprises a silicon nitride waveguide.

The first waveguide segment, the second waveguide segment, the input waveguide, and the output waveguide, can all be made using a same silicon nitride layer as the suspended silicon nitride structure. Additionally or alternatively, the first waveguide segment may correspond to the first base part and the second waveguide segment to the second base part.

The sensor may further comprise a light source, such as a laser source, for emitting a beam of light into the first end of the input waveguide, and a light intensity measuring unit for measuring an intensity of light outputted at the second end of the output waveguide. In this type of sensor, light passing through the reference waveguide interferes with light passing through the sensing member. Bending of the sensing member will change its effective refractive index. This will in turn change the interference between the light passing through the sensing member and reference waveguide. Such change can be detected using for example the light intensity measuring unit or some other means for detecting changes in light interference.

The sensing member can be configured to display a change in electrical characteristics in dependence of a bending of the sensing member. Furthermore, the sensing unit may comprise a processing unit configured for measuring the electrical characteristics of the sensing member. For example, the sensing member may comprise a strain gauge. In this manner, the sensor can be configured as an accelerometer.

The suspended silicon nitride structure can be made from a silicon nitride layer having a thickness of 750 nm or more, preferably 1 um or more, and more preferably 1.5 um or more. Furthermore, the silicon nitride layer, Si_{X}N_{Y}, may have a composition in which 0.71 <= (X/Y) <= 0.76, more preferably 0.75.

According to a further aspect, the present invention provides a method for manufacturing a suspended silicon nitride structure. According to the present invention, this method comprises the steps of providing a mono-crystalline aluminum oxide substrate, and depositing a sacrificial layer on the substrate, wherein the sacrificial layer comprising sacrificial material. The method comprises the additional steps of providing a first masking layer on top of the deposited sacrificial layer, patterning the first masking layer, and etching the sacrificial layer using the patterned first masking layer to thereby form a body of said sacrificial material.

The method comprises the additional steps of depositing a monolithic silicon nitride film of at least 500 nm thick on the substrate and body of sacrificial material in a single-step low-pressure chemical vapor deposition, LPCVD, step at a temperature between 750 and 950 ⁰C, providing a second masking layer on top of the deposited silicon nitride film, patterning the second masking layer, and etching the silicon nitride film using the patterned second masking layer to thereby form the silicon nitride structure. As a final step, the body of sacrificial material is etched to thereby allow the silicon nitride structure to be suspended.

The deposited silicon nitride layer may have a thickness of 750 nm or more, preferably 1 um or more, and more preferably 1.5 um or more. Additionally or alternatively, the silicon nitride layer, Si_{X}N_{Y}, may have a composition in which 0.71 <= (X/Y) <= 0.76, more preferably 0.75, and/or the mono-crystalline aluminum oxide substrate comprises a sapphire substrate.

Next, the present invention will be described in more detail by referring to the appended drawings, wherein:
Figure 1 illustrates a method for realizing Si₃N₄ microstructures on sapphire in accordance with the present invention;
Figure 2 illustrates a first method for realizing suspended Si₃N₄ microstructures on sapphire in accordance with the present invention;
Figure 3 illustrates a second method for realizing suspended Si₃N₄ microstructures on sapphire in accordance with the present invention;
Figure 4 illustrates a third method for realizing suspended Si₃N₄ microstructures on sapphire in accordance with the present invention;
Figure 5 illustrates a fourth method for realizing suspended Si₃N₄ waveguides on sapphire in accordance with the present invention;
Figure 6 illustrates a fifth method for realizing suspended Si₃N₄ waveguides on sapphire in accordance with the present invention;
Figure 7 illustrates an embodiment of an optical switch in accordance with the present invention;
Figure 8 illustrates an embodiment of a sensor in accordance with the present invention;
Figures 9A-C show spectra generated by four-wave mixing;
Figures 10A-C show top down views of possible configurations of optical resonators; and
Figure 11 shows a graph indicating transmission and types of dispersion of light in a waveguide.

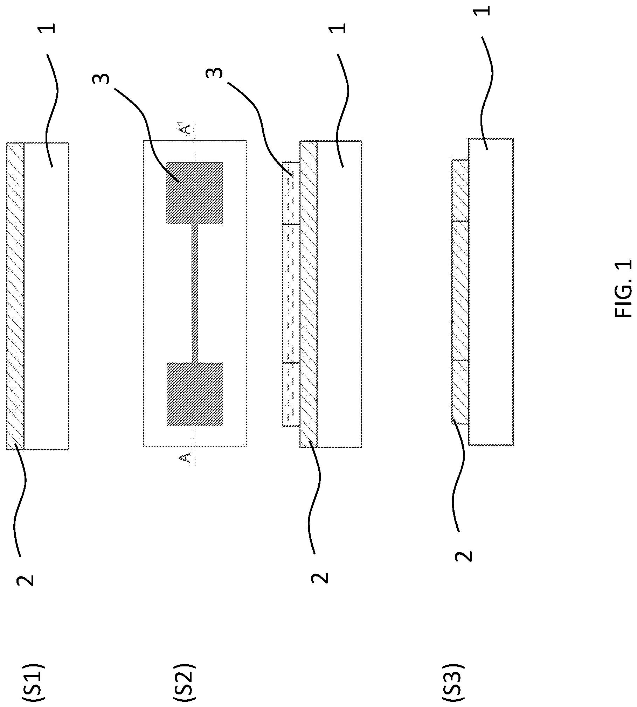

Figure 1 illustrates a method for realizing Si₃N₄ microstructures on sapphire in accordance with the present invention. In this method, as a first step, a sapphire substrate 1 is provided that is cleaned using HNO₃, ozone-steam, or a Piranha solution, i.e. a mixture of sulfuric acid H₂SO₄, water, and hydrogen peroxide H₂O₂. Additionally or alternatively, an RCA cleaning step can be performed.

As a next step S1, a single-step low-pressure chemical vapor deposition, LPCVD, process is used to deposit a stoichiometric Si₃N₄ layer 2 on sapphire substrate 1. Typically, NH₃ and SiH₂Cl₂ are used as precursors in a flow ratio of 3:1, and a deposition temperature between 750 and 950 ⁰C, preferably between 800 and 850 ⁰C, and more preferably around 825 ⁰C, is used at a pressure of around 200 mTorr. Thicknesses of Si₃N₄ layer 2 can be in the range between 10 nanometer and 10 micrometer, and are preferably in excess of 750 nm.

Instead of stoichiometric silicon nitride, a silicon nitride layer Si_{X}N_{Y} may be deposited that has a composition in which 0.71 <= (X/Y) <= 0.76.

As a further step, a photoresist layer 3 is applied onto the deposited Si₃N₄ layer 2. As a next step S2, photolithography techniques are used to define patterns in photoresist layer 3. This is shown in top view and cross-sectional view in figure 1. Next, in step S3, the pattern in photoresist 3 is transferred into Si₃N₄ layer 2 by means of plasma etching, for example using reactive ion etching using a CHF₃/O₂ plasma. As a next step, photoresist layer 3 is removed.

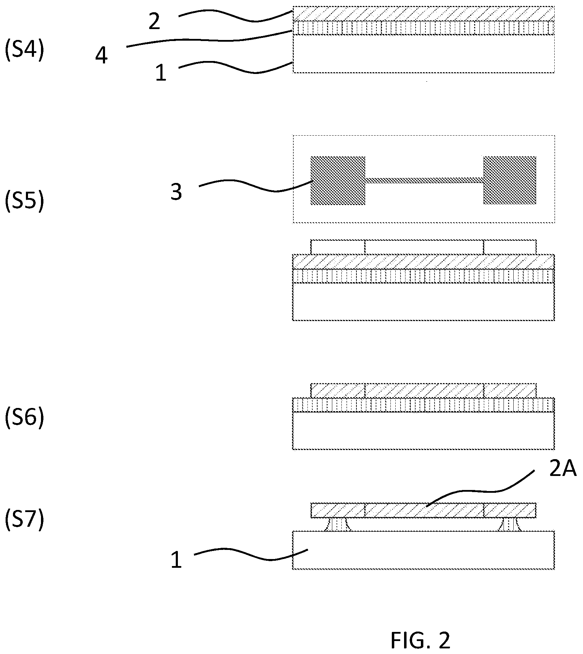

Figure 2 illustrates a first method for realizing suspended Si₃N₄ microstructures on sapphire in accordance with the present invention. Compared to figure 1, the process of figure 2 differs in that suspended Si₃N₄ microstructures are formed.

The first step of this method is identical to that of figure 1. A sapphire substrate 1 is provided and cleaned. As a next step, a single-step LPCVD process is used to deposit an amorphous silicon layer 4 using SiH₄ as a precursor. The thickness of this layer can be in the range between 10 nm and 10 um. After this deposition, a cleaning step may be used that is identical or similar to the cleaning step used for cleaning sapphire substrate 1.

As a next step S4, a stoichiometric Si₃N₄ layer 2 is deposited on sapphire substrate 1 using the LPCVD process of figure 1. Furthermore, similar to figure 1, a photoresist layer 3 is applied and patterned in step S5, and the pattern is transferred into Si₃N₄ layer 2 in step S6.

The method continues, in step S7, by etching the amorphous silicon underneath Si₃N₄ layer 2 at predefined positions on substrate 1. In this respect, the amorphous silicon acts as a sacrificial layer. This etching is typically performed using a wet-chemical etching step through the created openings in Si₃N₄ layer 2, for example using Tetramethylammonium hydroxide, TMAH. This etching step causes an under-etch that should be accounted for when designing the mask layers to be used during the lithography step. Furthermore, the composition of Si₃N₄ layer 2 may be non-stoichiometric as explained in connection with figure 1.

As shown in figure 2, final figure, Si₃N₄ layer 2 comprises a suspended part 2A that is spaced apart from sapphire substrate 1.

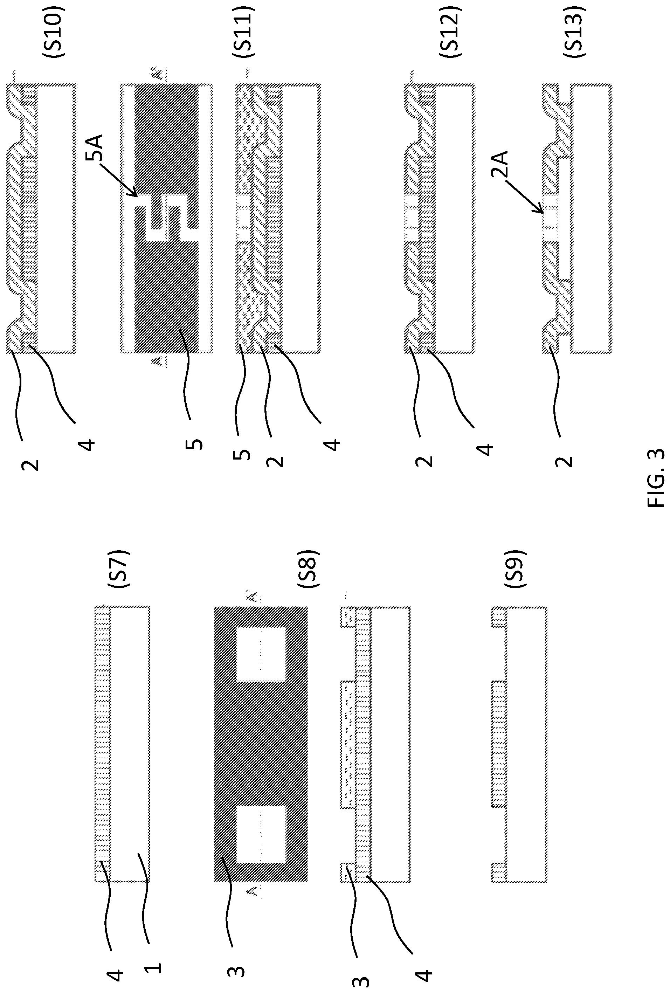

Figure 3 illustrates a second method for realizing suspended Si₃N₄ microstructures on sapphire in accordance with the present invention. As a first step, a sapphire substrate 1 is provided and cleaned similar to that in figure 1. As a next step S7, an amorphous silicon layer 4 is deposited onto sapphire substrate 1 using a similar or identical process as explained in connection with figure 2. In step S8, a photoresist layer 3 is applied and patterned. The pattern in transferred in step S9 into amorphous silicon layer 4 using plasma etching, such as reactive ion etching using an SF₆/CHF₃/O₂ plasma. Subsequently in step S9, photoresist layer 3 is removed and a cleaning step is performed similar or identical to the cleaning step for cleaning substrate 1. After having performed step S9, small bodies of amorphous silicon layer 4 remain on substrate 1.

Next, in step S10 a single-step LPCVD process is used for depositing a Si₃N₄ layer 2 similar or identical to the deposition process in figures 1 and 2. Next, in step S11 a further photoresist layer 5 is applied and patterned. More in particular, a pattern 5A is formed for realizing a meandering Si₃N₄ track. Other shapes would be equally possible. This pattern is transferred in step S12 into Si₃N₄ by means of plasma etching step similar or identical to the etching step in figures 1 and 2. After etching, further photoresist layer 3 is removed in step S12.

As a next step S13, amorphous silicon layer 4 is removed by means of wet and dry etching. First, a wet-chemical etching step is performed using a wet-chemical etching process using TMAH as illustrated in figure 2. This process is continued until the Si₃N₄ structures are nearly suspended or released. Thereafter, a dry-etching step, such as gas phase etching, is performed using XeF₂ to obtain fully suspended Si₃N₄ structures.

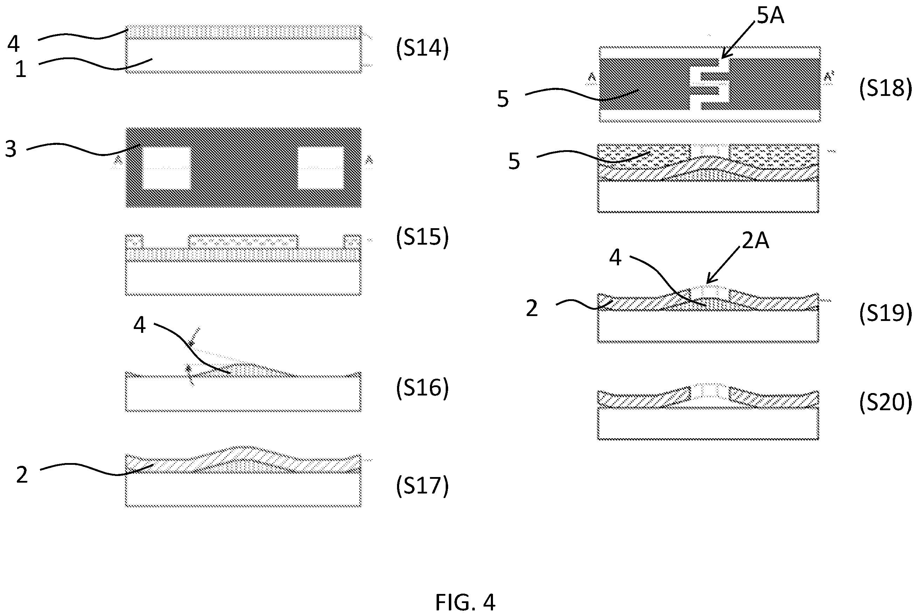

Figure 4 illustrates a third method for realizing suspended Si₃N₄ microstructures on sapphire in accordance with the present invention. As a first step, a sapphire substrate 1 is provided that is cleaned similar or identical to that shown in figure 1. As a next step S14, a single-step LPCVD deposition process is performed for depositing an amorphous silicon layer 4 similar or identical to that of figure 2. In addition, a SiO₂ layer and a Si₃N₄ layer are deposited in the order mentioned (not shown). These layers are then covered with a photoresist layer 3 that is patterned in step S15. The pattern in photoresist layer 3 is transferred into the Si₃N₄ layer using a dry-etching technique after which photoresist layer 3 is removed. Thereafter, a localized oxidation of silicon, LOCOS, process is applied to locally oxidize amorphous silicon layer 4 through the SiO₂ layer. Due to the presence of the SiO₂ layer, oxygen will laterally diffuse causing a vertical tapering in the oxidized amorphous silicon layer. After oxidation, one or more selective etching steps will be performed in step S16 for removing the Si₃N₄ layer, and the deposited and formed SiO₂ thereby leaving the remaining amorphous silicon layer 4. After this step, a tapered amorphous silicon layer 4 is obtained that tapers in the vertical direction.

As a next step, a cleaning step will be performed similar or identical to the step of cleaning substrate 1 in figure 1. Then, in step S17, a single-step LPCVD deposition process is performed for depositing a Si₃N₄ layer similar or identical to that of figure 1. In step S18, a further photoresist layer 5 is deposited and patterned for forming a meandering structure 5A similar or identical to that of figure 3. This pattern is transferred into Si₃N₄ layer 2 in step S19 using a plasma etching step similar or identical to that of figure 3 and photoresist layer 5 is removed. As a next step S20, amorphous silicon layer 4 is removed using a combination of wet and dry etching steps similar or identical to that of figure 3.

In figures 1-4 above, an optional cladding layer (not shown) can be deposited onto the formed Si₃N₄ layer. Such cladding layer may for example comprise a SiO₂ layer that is deposited using a single-step LPCVD process using a tetraethyl orthosilicate, TEOS, precursor. The thickness of such layer may be in the order of 1 um. Furthermore, the cladding layer may be subjected to an annealing step at 1100 °C for 1-3 hours in an N₂-environment. A cladding layer may also be deposited using atomic layer deposition or sputtering of Al₂O₃. Compared to SiO₂, Al₂O₃ has the advantage of being transparent in the mid-infrared spectral range.

In addition, instead of amorphous silicon, sacrificial layers of different sacrificial material can be used.

Furthermore, if needed, sapphire substrate 1 can be diced into individual dies after completing the above and optionally other processing steps.

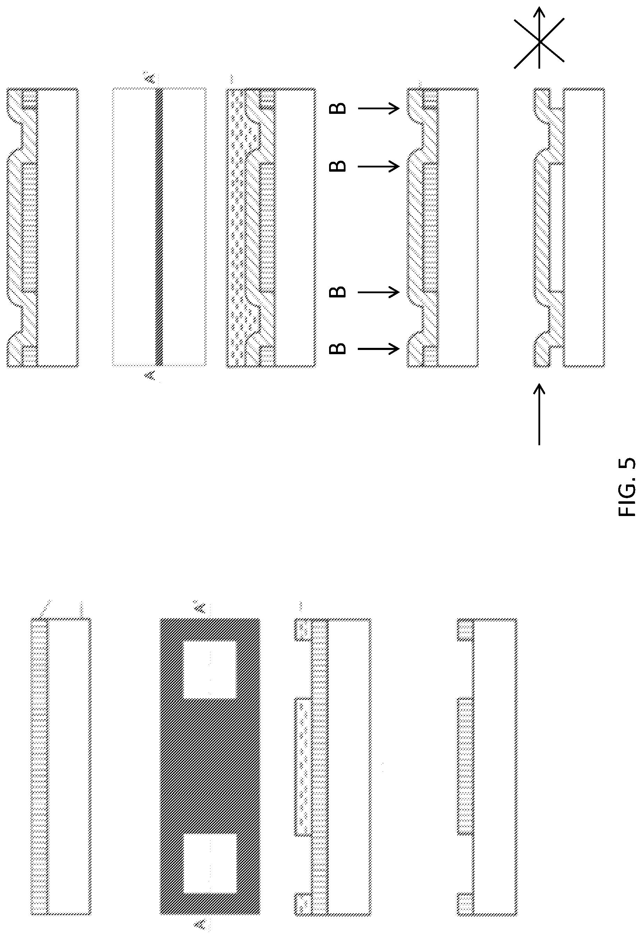

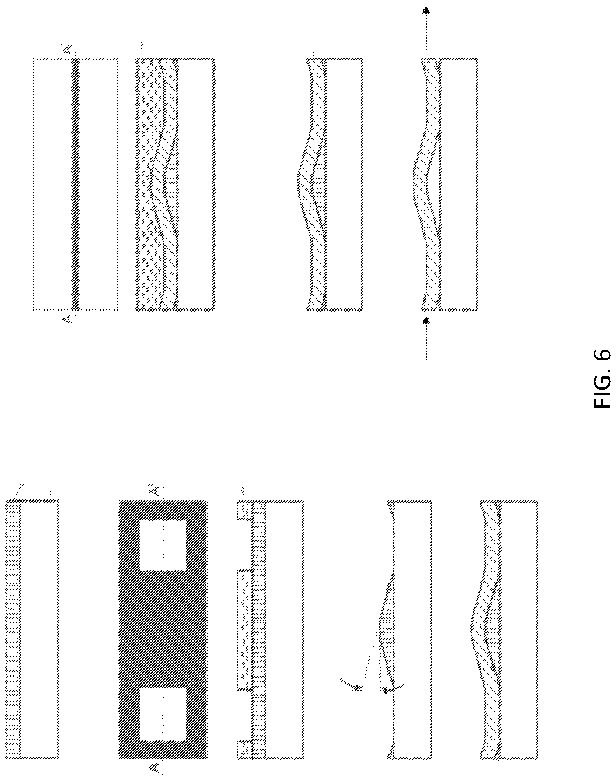

Figures 5 and 6 illustrate a fourth and fifth method for realizing suspended Si₃N₄ microstructures on sapphire in accordance with the present invention. Here, figure 5 corresponds to the process depicted in figure 3 and figure 6 to that shown in figure 4. More in particularly, figures 5 and 6 illustrate the consequences of depositing a Si₃N₄ waveguide over a sacrificial layer for the transmission of an optical signal indicated by the arrows. As shown in figure 5, due to the strong vertical boundaries in amorphous silicon layer 4 at the positions indicated by B, little to no light will be outputted in figure 5. On the other hand, due to the vertical tapering in figure 6, most if not all of the inputted light will be outputted.

It should be noted that the tapering illustrated in figures 4 and 6 is not true to scale. More in particular, a typical tapering would be in the range between 1 and 50 nm vertical offset per um in the horizontal direction.

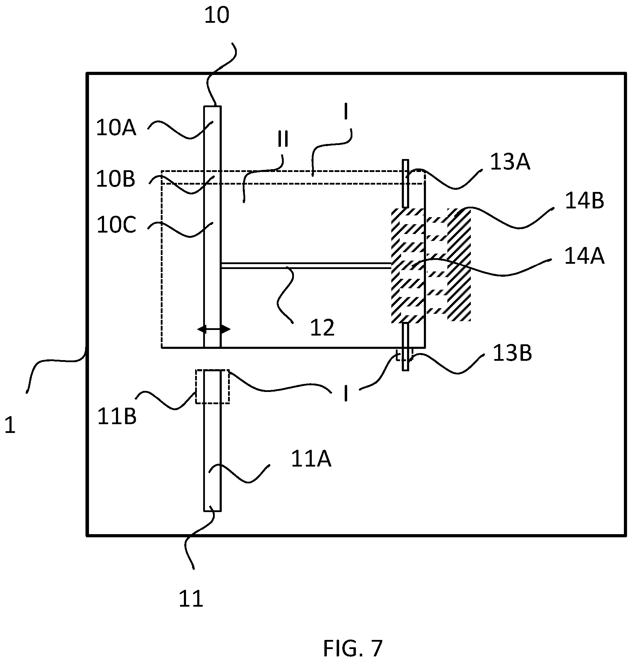

Figure 7 illustrates an embodiment of an optical switch in accordance with the present invention.

As shown, the optical switch comprises a sapphire substrate 1. On sapphire substrate 1, a sacrificial SiO₂ layer has been deposited, which has been patterned and selectively removed. In region II, this sacrificial layer is completely removed, whereas regions I indicate a transitional region in which the sacrificial layer has a vertical tapering as discussed in connection with figure 6.

The optical switch comprises an input Si₃N₄ ridge waveguide 10 which outside of regions I and II has a part 10A that is directly formed on sapphire substrate 1. Inside region I, waveguide 10 has a part 10B that is gradually lifted away from substrate 1 by an increasingly thicker sacrificial layer. Inside region II, the sacrificial layer has been etched away. Consequently, waveguide 10 comprises a suspended part 10C.

An output waveguide 11 is arranged opposite to waveguide 10, albeit at a given horizontal clearance. The end facets of waveguides 10 and 11 are shaped to allow a proper optical coupling provided that waveguides 10, 11 are aligned.

Similar to input waveguide 10, output waveguide 11 comprises a part 11A that is directly contacting sapphire substrate 1 and a part 11B that gradually moves away from sapphire substrate 1 to bring the ends of parts 11B and 10B in vertical alignment.

Suspended part 10C is fixedly connected to a support beam 12 that is formed of a suspended Si₃N₄ beam. On another end, support beam 12 is connected to a suspended electrode 14A. This electrode comprises a Si₃N₄ base on which an electrode metal layer has been deposited. On opposite sides, suspended electrode 14A is connected to sapphire substrate 1 using Si₃N₄ springs 13A, 13B, which have, similar to input waveguide 10, a part that is directly connected to sapphire substrate 1, a part that is gradually lifted away from substrate 1 by the sacrificial layer, and a part that is suspended above substrate 1.

Non-suspended electrode 14B comprises a Si₃N₄ base that is arranged on the sacrificial layer, which in turn is deposited on sapphire substrate 1. On top of the Si₃N₄ base, an electrode metal layer has been deposited.

By applying a voltage between electrodes 14A, 14B, these electrodes can either be pulled together or be pushed apart. The applied voltage thereby forms an actuation signal in dependence of which suspended part 10C performs a lateral movement as indicated by the arrow. In this manner, the optical coupling between input waveguide 10 and output waveguide 11 can be established or broken.

By arranging a plurality of output waveguides adjacent to one another, a 1xn switch can be realized. More in particular, an optical coupling between the input waveguide and one among the n output waveguides can be established in dependence of the actuation signal.

A possible drawback of using a support beam 12 as illustrated in figure 7 is related to optical loss at the point at which support beam 12 is connected to suspended part 10C. To address this issue, it is possible to provide a clearance between Si₃N₄ support beam 12 and suspended part 10C and to fill this clearance with a cladding layer, such as a SiO₂ layer. In this manner, a cladding layer or a material suitable to be used as a cladding layer is used to connect suspended part 10C and support beam 12.

In even other embodiments, suspended electrode 14A is formed directly on, below or to the side of suspended part 10C. To prevent optical losses, a cladding layer such as a SiO₂ layer can be provided in between suspended part 10C and the metal layer of electrode 14A.

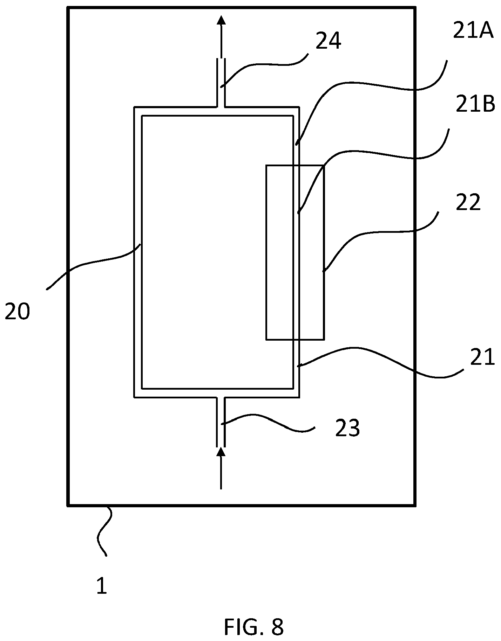

Figure 8 illustrates an embodiment of a general sensor in accordance with the present invention. This sensor comprises a reference arm 20 comprising a Si₃N₄ waveguide on a sapphire substrate 1 and a sensing arm 21 also comprising a Si₃N₄ waveguide on a sapphire substrate 1.

Sensing arm 21 comprises a part 21A that is directly arranged on sapphire substrate 1 and a part 21B that is suspended above sapphire substrate 1 by using a sacrificial layer that has been etched away inside region 22. A tapering (not shown) may be used to provide a transition between parts 21A and 21B.

Light inputted into input Si₃N₄ waveguide 23 is split, preferably equally, over reference arm 20 and sensing arm 21. At output Si₃N₄ waveguide 24, the light from these arms is combined and fed to a light intensity meter (not shown).

Suspended part 21B of sensing arm 21 may deform. For example, suspended part 21B may bend towards or away from substrate 1. Alternatively or additionally, suspended part 21B may bend in a direction parallel to sapphire substrate 1.

Regardless the direction of movement, most if not any deformation of suspended part 21B will change the effective refractive index of suspended part 21B. Consequently, the effective optical path length through sensing arm 21 will change whereas the optical path length through reference arm 20 will essentially remain constant.

In some embodiments, particularly but not necessarily those in which suspended part 21B has a more complex shape than shown, such as a spiral, reference arm 20 can also comprise a suspended part similar to the one described in relation to sensing arm 21 and/or sensing window 22 can extend to both arms of the sensor. This places the reference arm in a more similar environment and therefore allows for it to provide a better reference.

At output waveguide 24, light from both arms 20, 21 will interfere. Depending on the relative phase offset, the interference can be constructive or destructive. This difference can be determined using the light intensity meter that is connected to output waveguide 24.

The sensor of figure 8 can be used to determine bending of suspended part 21B by looking at the measured light intensity value and comparing this value to a known reference value or a previously determined value, preferably a value representative for a state of sensing arm 21 in which the arm was not bent. More in particular, by comparing these values, the amount of bending can be determined or estimated.

The bending of sensing arm 21B can be caused by various factors depending on the type of sensor. For example, at least suspended part 21B may be provided with a capturing agent or coating layer for capturing specific species, particles, molecules, pathogens, or the like. Once these species, particles, molecules or pathogens adhere to suspended part 21B, this part may bend as a result of the accumulated weight. In this manner, the sensor can be used as a detector for detecting the presence and/or quantity of adhered particles. In some embodiments, the capturing agent can also be applied onto reference arm 20. In addition, in some embodiments in which the capturing agent is only applied to sensing arm 21, reference arm 20 may also have a suspended part similar to sensing arm 21.

Suspended part 21B may also bend as a result of an acceleration of the sensor as such. It is therefore possible to use the sensor of figure 8 as an accelerometer. Alternatively, suspended part 21B may also bend as a result of a collision with an ultrasonic wave. It is therefore possible to use the sensor of figure 8 as an ultrasound sensor.

In figure 8, a sacrificial layer was used for allowing part 21B to suspend above substrate 1. Alternatively, suspended part 21B can be realized by arranging a recess in or through hole through substrate 1. Such through hole is etched from the backside of sapphire substrate 1 using a suitable wet-etchant such as a H₂SO₄-H₃PO₄ mixture and a suitable mask layer such as SiO₂ deposited on the back side. Such etchant should preferably not or hardly etch suspended part 21B once it reaches the front side of sapphire substrate 1. When using wet-etchants for realizing through holes, C-plane oriented sapphire is preferably used. An advantage of using a through hole is that the sensor could be placed inside a stream of particles to be detected without completely blocking the particles inside this stream.

Sensing arm 21 is depicted as a straight waveguide. Other shapes, such as suspended membranes, suspended interdigitated structures, and suspended spirals are not excluded.

Although the sensor depicted in figure 8 is an optical application, the present invention is not limited thereto. For example, instead of relying on interference to detect bending of sensing arm 21, non-optical means could be employed such as a strain gauge or other electrical means. In such case, reference arm 20 may be omitted.

Next, an application of monolithic silicon nitride on sapphire substrates for non-linear optical applications will be described in more detail by referring to figures 9-11.

Optical resonators using closed-loop waveguides rely on four-wave mixing to generate the optical frequency comb. FWM is the non-linear optical process by which two photons are annihilated and two new photons are created in a non-linear optical material, as illustrated in figures 9A and 9B. Specifically, figure 9B shows degenerate FWM, where the two annihilated photons are of identical energy (w₀), whereas figure 9B shows non-degenerate FWM, where the two annihilated photons are of unequal energy (w₀, w₁). The difference in frequency between the original photons and the photons newly generated (Dw) corresponds to the distance between adjacent resonator modes, or an integer times this distance.

Because FWM is subject to conservation of energy without loss to the material, the energy splitting needs to be symmetric in both cases. The modes will be approximately equally spaced in a resonator with low integrated dispersion, as shown in Figure 9C. In this case, FWM will fill all the cavity modes, creating a frequency comb. The dynamics of comb formation are highly complex, and involve both degenerate and non-degenerate FWM of modes that are not necessarily adjacent.

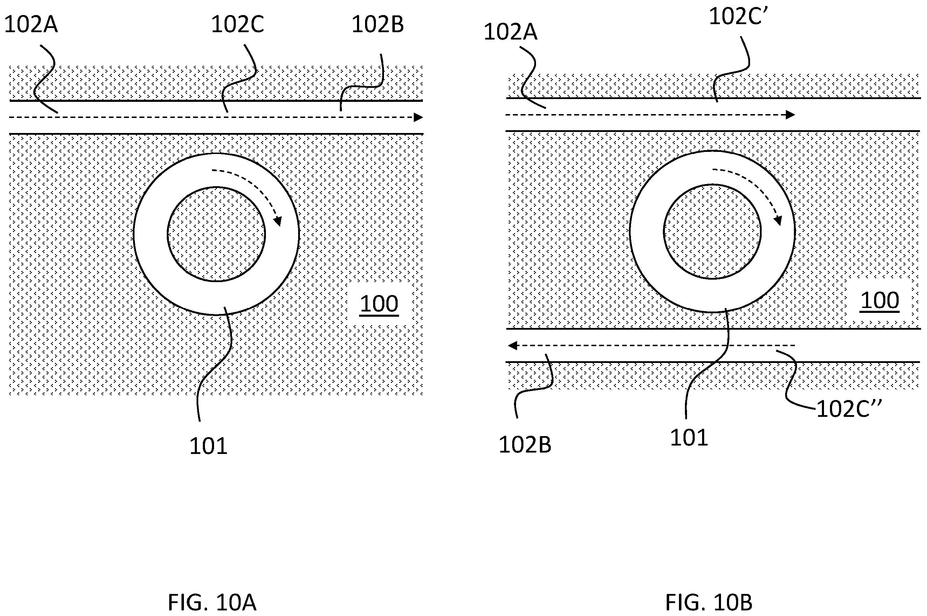

Figures 10A-C each show an optical resonator that could be part of a light source according to the present invention. Specifically, each of these figures show an input waveguide 102A having a coupling section 102C; 102C', an output waveguide 102B also having a coupling section 102C; 102C", as well as at least one closed-loop waveguide 101; 101A, 101B. The coupling sections of the input and/or output waveguide each optically couple the respective waveguide with the closed-loop waveguide.

Closed-loop waveguide 101 in the embodiments shown is a ring resonator or, what is also referred to as a ring cavity. However, waveguide 101 can also take on other shapes such as that of a racetrack waveguide. A racetrack waveguide is a type of closed-loop waveguide comprising a plurality of semi-circular sections and a plurality of linear sections integrally connected in a manner such that the waveguide as a whole loops back on itself.

The closed-loop waveguide is a stand-alone structure which interacts with its surroundings by optical coupling. This can be achieved in a number of ways, such as directing a laser onto the waveguide directly, via free space or via a fiber directly connected to the waveguide. Such coupling can be enabled by providing waveguide 101 with a prism for in-coupling said laser, or by providing waveguide 101 with coupling gratings. In the embodiments shown, optical coupling is enabled by arranging the coupling sections 102C; 102C', 102C" adjacent to closed-loop waveguide 101. When arranged sufficiently close to each other, the coupling sections and the parts of the closed-loop waveguide adjacent thereto together form a directional coupler. Therefore light will jump from coupling sections 102C; 102C', 102C" to closed-loop waveguide 101 and vice-versa.

Closed-loop waveguide 101 is a silicon nitride waveguide deposited onto a mono-crystalline aluminum oxide substrate 100, which preferably comprises a sapphire substrate. Input waveguide 102A and output waveguide 102B can also be fabricated on this material and are preferably ridge type waveguides. However it is also possible for these waveguides to be made of other materials. Closed-loop waveguide 101 has a thickness of 500 nanometer or more. The top down views shown should not be interpreted as providing insight to the height of any of the waveguides. While the other waveguides are preferably as thick as closed-loop waveguide 101, these can also have thicknesses different from that of closed-loop waveguide 101, as well as different from each other. Likewise, widths and lengths of waveguides, as well as distances between them, as shown in figures 10A-C, are not true to scale.

Figure 10A shows a specific embodiment in which input waveguide 102A, coupling section 102C, and an output waveguide 102B are all integrally connected and are collectively embodiment by a singular linear waveguide. Further embodiments are possible in which the input waveguide and/or the output waveguide are bent and/or curved. The direction in which light travels though the in linear waveguide dictates the direction in which light coupled to the closed-loop waveguide will travel in said closed loop waveguide. Similarly, the direction in which light travels in the closed-loop waveguide dictates the direction in which light coupled to the output waveguide will travel in said output waveguide. In this particular embodiment, light travels from left to right in input waveguide 102A and consequently will travel from left to right in the part of closed-loop waveguide adjacent to the coupling section of input waveguide. In closed-loop waveguide 101, light travels clockwise. In this embodiment the coupling sections of the input and output waveguides are embodied by the same piece of waveguide. Light will therefore also travel from left to right in the coupling section of the output waveguide.

Figure 10B shows a specific embodiment in which input waveguide 102A and output waveguide 102B are arranged on different sides, specifically opposite sides, of the closed-loop waveguide 101. In this particular embodiment, light travels from left to right in input waveguide 102A and consequently will travel from left to right in the part of closed-loop waveguide adjacent to the coupling section of input waveguide. In closed-loop waveguide 101, light travels clockwise. Some light will leak through the directional coupler formed by the closed loop waveguide and the coupling section of the input waveguide. In this embodiment the coupling sections of the input and output waveguides are embodied by different pieces of waveguide. Because the coupling section 102C" of the output waveguide 102B is adjacent to a part of the closed-loop waveguide in which light travels from right to left, light coupled from that part of the closed loop waveguide that is coupled into the output waveguide will also travel from right to left. Consequently, light will be emitted from the optical resonator in the same direction as it was received.

In some embodiments, not shown, input waveguide 102A extends beyond coupling section 102C' and loops back to integrally connect to the coupling section 102C'' of the output waveguide 102B. Such an embodiment allows for any input light that leaks beyond coupling section 102C' to be part of the ultimately emitted beam of light while in-coupling and out-coupling behavior of the closed-loop waveguide can be configured separately. In some embodiments, not shown, the coupling sections 102C' and 102C" can be sufficiently long for multiple closed loop waveguides to be arranged in between them, and wherein each of the plurality of closed loop waveguides are optically coupled to the input waveguide and the output waveguide and not optically coupled to one another.

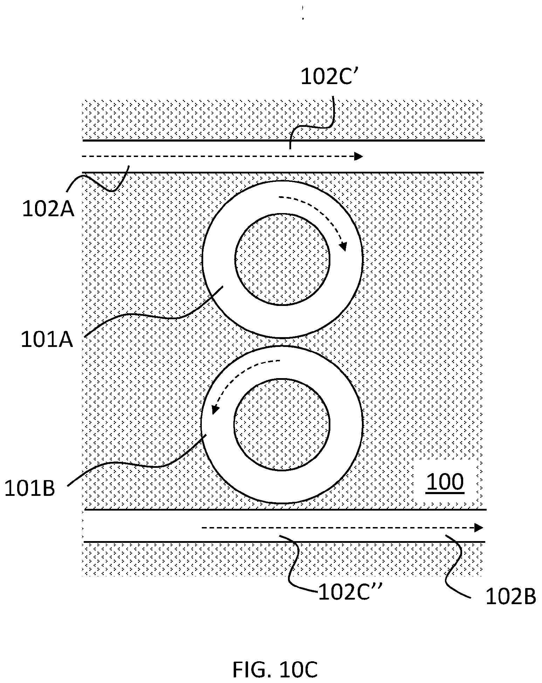

Figure 10C shows a specific embodiment in which two adjacently arranged closed-loop waveguides 101A, 101B are optically coupled to each other. The loop dimensions need not be identical. However, when the loop dimension are identical, a steeper filter effect can be obtained. Similar to the figure 10B embodiment, input waveguide 102A and output waveguide 102B are arranged on different sides, specifically opposite sides, of the closed-loop waveguide 101A, 101B.

In this particular embodiment, light is coupled between the closed-loop waveguides 101A, 101B by the same directional coupling mechanism as described earlier. Consequently, whereas light travels clockwise in closed-loop waveguide 101A, it travels counterclockwise in closed loop waveguide 101B.

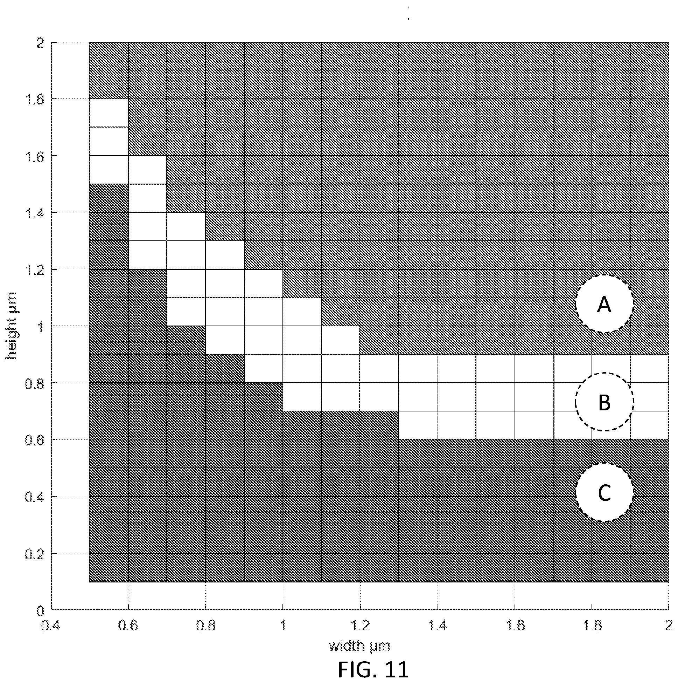

Figure 11 shows types of dispersion that can occurs for light having a wavelength of 1550 nm in a silicon nitride waveguide. Specifically, the horizontal X-axis shows a number of possible widths that such a waveguide can have, in particular between 0.5 and 2 micrometer. The vertical Y-axis shows a number of possible heights that such a waveguide can have, in particular between 0.1 and 2 micrometer. In waveguides of which the width/height combination puts said waveguide in area C, light of this wavelength is not guided at all. In waveguides of which the width/height combination puts said waveguide in area B, light of this wavelength will experience normal dispersion. In waveguides of which the width/height combination puts said waveguide in area A, light of this wavelength will experience anomalous dispersion. As can be seen, a waveguide with a thickness of approximately 900 nm is required for light having a wavelength of 1550 nm to experience anomalous dispersion at all, which shows the earlier assertion that relatively thick silicon nitride waveguides are required to achieve anomalous dispersion for wavelengths in the infra-red spectrum. In the above, the present invention has been explained using detailed embodiments thereof. However, it should be apparent to the skilled person that various modifications are possible to these embodiments without deviating from the scope of the present invention, which is defined by the appended claims

## Claims

1. A light source for generating an optical frequency comb, comprising:
an optical resonator, comprising:
a mono-crystalline aluminum oxide substrate;
an input waveguide;
an output waveguide;
a closed-loop waveguide arranged on the substrate, and optically coupled to the input waveguide and output waveguide, wherein the closed-loop waveguide is configured for:
receiving at least a part of a beam of light from the input waveguide;
accumulating optical energy inside the closed-loop waveguide using the received beam of light;
generating an optical frequency comb using the accumulated optical energy;
coupling at least a part of the generated optical frequency comb to the output waveguide;
wherein the closed-loop waveguide is a monolithic silicon nitride waveguide having a thickness of 500 nm or more, and which is deposited on the substrate.

2. The light source according to claim 1, further comprising a laser source for transmitting a beam of light into the input waveguide;
wherein the laser source is preferably a continuous-wave laser, and/or wherein the laser source is preferably configured to generate a light beam at a first frequency, wherein the closed-loop waveguide is configured to generate said frequency comb to have equidistantly arranged frequency components around the first frequency;
wherein the closed-loop waveguide is preferably configured to generate a Kerr optical frequency comb.

3. The light source according to any of the preceding claims, wherein the silicon nitride waveguide has a thickness of 750 nm or more, preferably 1 um or more, and more preferably 1.5 um or more; and/or
wherein the silicon nitride waveguide comprises a Si_{X}N_{Y} layer, wherein 0.71 <= (X/Y) <= 0.76; and/or
wherein the mono-crystalline aluminum oxide substrate comprises a sapphire substrate; and/or
wherein the monolithic silicon nitride waveguide is deposited directly on the mono-crystalline aluminum oxide substrate, or wherein the monolithic silicon nitride waveguide is deposited on the mono-crystalline aluminum oxide substrate via an intermediate layer, wherein a thickness ratio between a thickness of the mono-crystalline aluminum oxide substrate and the intermediate layer exceeds 100:1, more preferably 1000:1.

4. The light source according to any of the preceding claims, wherein the closed-loop waveguide, the input waveguide and/or the output waveguide, is a ridge waveguide; and/or
wherein at least one of the input waveguide and the output waveguide is a silicon nitride waveguide formed during the same process as the silicon nitride waveguide of the closed-loop waveguide; and/or
wherein the input waveguide and output waveguide are part of a same waveguide, or wherein the input waveguide and output waveguide are arranged on different and preferably opposite sides of the closed-loop waveguide.

5. A method for manufacturing the optical resonator according to any of the claims 1-4, the method comprising:
providing a mono-crystalline aluminum oxide substrate;
depositing a monolithic silicon nitride film of at least 500 nm thick on the substrate in a single-step low-pressure chemical vapor deposition, LPCVD, process at a temperature between 750 and 950 °C;
providing a masking layer on top of the deposited silicon nitride film;
patterning the masking layer;
etching the silicon nitride film using the patterned masking layer to thereby form at least the closed-loop waveguide, and preferably all, among the input waveguide, output waveguide, and closed-loop waveguide.

6. The method according to claim 5, wherein the deposited silicon nitride layer has a thickness of 750 nm or more, preferably 1 um or more, and more preferably 1.5 um or more; and/or
wherein the silicon nitride layer, Si_{X}N_{Y}, has a composition in which 0.71 <= (X/Y) <= 0.76; and/or
wherein the mono-crystalline aluminum oxide substrate comprises a sapphire substrate.

7. A microelectromechanical system (MEMS) optical switch, comprising:
a mono-crystalline aluminum oxide substrate;
a monolithic silicon nitride optical waveguide having a thickness of 500 nm or more, and which is deposited on the substrate, said optical waveguide comprising:
a base part deposited onto the substrate, wherein the first base is configured to receive a beam of light, and
a suspended part having a first end at which the suspended part is integrally connected to the base part and a second end configured to emit said beam of light;
a light reception unit comprising an optical waveguide;
an actuator configured for displacing the second end relative to the light reception unit in response to an actuation signal to allow or prevent the light beam emitted by the second end to enter the optical waveguide of the light reception unit.

8. The MEMS optical switch according to claim 7, wherein the light reception unit comprises a plurality of optical waveguides, wherein the actuator is configured to, in response to the actuation signal, select one optical waveguide among the plurality of optical waveguides in which the light beam emitted by the second end is allowed to enter; and/or
wherein the actuator is configured to bend the suspended part in response to the actuation signal, wherein the actuator is preferably configured to bend the suspended part thereby displacing the second end in a direction parallel to the substrate and/or in a direction perpendicular to the substrate.

9. The MEMS optical switch according to any of the claims 7-8, wherein the actuator is an electrostatic actuator comprising a non-suspended electrode that is fixedly connected to the substrate and a suspended electrode, wherein a spacing between the suspended electrode and the non-suspended electrode can be changed by applying an electrical actuation signal to the electrodes, and wherein the suspended electrode is mechanically coupled to the suspended part;
wherein the suspended electrode and the non-suspended electrode are preferably each formed using one or more conductive layers, wherein the one or more conductive layers of the suspended electrode are more preferably formed on the suspended part, the MEMS optical switch even more preferably further comprising a cladding layer arranged in between the silicon nitride optical waveguide of the suspended part and the one or more conductive layer(s) of the suspended electrode; and/ or
wherein the MEMS optical switch further comprises a supporting beam that mechanically couples the suspended electrode to the suspended part and/or the MEMS optical switch further comprises suspended springs having one end fixedly connected to the substrate and another end to the suspended electrode, wherein the springs and/or supporting beam are preferably each formed using the same silicon nitride layer as the silicon nitride layer used for forming the silicon nitride optical waveguide.

10. A system, comprising the MEMs optical switch according to any of the claims 7-9, and a laser source configured to generate a laser beam and mutually arranged with the MEMs optical switch such that the generated beam enters the base part of the silicon nitride waveguide.

11. A sensor, comprising:
a mono-crystalline aluminum oxide substrate;
a sensing member comprising a suspended silicon nitride structure having at least one end fixedly connected to the substrate; and
a sensing unit for sensing a bending of the sensing member;
wherein the suspended silicon nitride structure is realized using the deposition of a monolithic silicon nitride film on the substrate, said film having a thickness of 500 nm or more.

12. The sensor according to claim 11, further comprising a capturing agent or coating layer for capturing particles and/or molecule of at least 100 Dalton, such as particular proteins, DNA, ionic compounds, bacteria, or virii.

13. The sensor according to any of the claims 11-12, further comprising a first body and a second body spaced apart from the first body, the first and second body each being made of a sacrificial layer, wherein the sensing member comprising a first and second base part arranged on the first and second body, respectively, and the suspended part extending between the first and second base parts, wherein preferably only a segment of the first and second base parts is arranged on the first and second bodies, respectively, a remaining segment of the first and second base parts being arranged directly on the substrate; or
the sensor further comprising one of a recess in or a through hole through the substrate arranged underneath the suspended silicon nitride structure.

14. The sensor according to claim 11, wherein the sensing member is configured to display a change in electrical characteristics in dependence of a bending of the sensing member, and wherein the sensing unit comprises a processing unit configured for measuring the electrical characteristics of the sensing member;
wherein the sensing member preferably comprises a strain gauge;
wherein the sensor is preferably an accelerometer.

15. A method for manufacturing a suspended silicon nitride structure, comprising:
providing a mono-crystalline aluminum oxide substrate;
depositing a sacrificial layer on the substrate, the sacrificial layer comprising sacrificial material;
providing a first masking layer on top of the deposited sacrificial layer;
patterning the first masking layer;
etching the sacrificial layer using the patterned first masking layer to thereby form a body of said sacrificial material;
depositing a monolithic silicon nitride film of at least 500 nm thick on the substrate and body of sacrificial material in a single-step low-pressure chemical vapor deposition, LPCVD, step at a temperature between 750 and 950 °C;
providing a second masking layer on top of the deposited silicon nitride film;
patterning the second masking layer;
etching the silicon nitride film using the patterned second masking layer to thereby form the silicon nitride structure; and
etching the body of sacrificial material to thereby allow the silicon nitride structure to be suspended.

## Patentansprüche

1. Lichtquelle zum Erzeugen eines optischen Frequenzkamms, umfassend:
einen optischen Resonator, umfassend:
ein monokristallines Aluminiumoxidsubstrat;
einen Eingangswellenleiter;
einen Ausgangswellenleiter;
einen geschlossenen Wellenleiter, der auf dem Substrat angeordnet und optisch mit dem Eingangswellenleiter und dem Ausgangswellenleiter gekoppelt ist, wobei der geschlossene Wellenleiter konfiguriert ist zum:
Empfangen von mindestens einem Teil eines Lichtstrahls vom Eingangswellenleiter;
Akkumulieren optischer Energie im geschlossenen Wellenleiter unter Verwendung des empfangenen Lichtstrahls;
Erzeugen eines optischen Frequenzkamms unter Verwendung der akkumulierten optischen Energie;
Koppeln von mindestens einem Teil des erzeugten optischen Frequenzkamms an den Ausgangswellenleiter;
wobei der geschlossene Wellenleiter ein monolithischer Siliziumnitrid-Wellenleiter mit einer Dicke von 500 nm oder mehr ist, der auf dem Substrat abgeschieden ist.

2. Lichtquelle nach Anspruch 1, die ferner eine Laserquelle zum Übertragen eines Lichtstrahls in den Eingangswellenleiter umfasst;
wobei die Laserquelle vorzugsweise ein Dauerstrichlaser ist, und/oder wobei die Laserquelle vorzugsweise konfiguriert ist, um einen Lichtstrahl mit einer ersten Frequenz zu erzeugen, wobei der geschlossene Wellenleiter konfiguriert ist, um den Frequenzkamm so zu erzeugen, dass er äquidistant um die erste Frequenz angeordnete Frequenzkomponenten aufweist;
wobei der geschlossene Wellenleiter vorzugsweise konfiguriert ist, um einen optischen Kerr-Frequenzkamm zu erzeugen.

3. Lichtquelle nach einem der vorstehenden Ansprüche, wobei der Siliziumnitrid-Wellenleiter eine Dicke von 750 nm oder mehr, vorzugsweise 1 um oder mehr und noch besser 1,5 um oder mehr aufweist; und/oder
wobei der Siliziumnitrid-Wellenleiter eine Si_{X}N_{Y}-Schicht umfasst, wobei 0,71 <= (X/Y) <= 0,76; und/oder
wobei das monokristalline Aluminiumoxidsubstrat ein Saphirsubstrat umfasst; und/oder
wobei der monolithische Siliziumnitrid-Wellenleiter direkt auf dem monokristallinen Aluminiumoxidsubstrat abgeschieden wird, oder wobei der monolithische Siliziumnitrid-Wellenleiter über eine Zwischenschicht auf dem monokristallinen Aluminiumoxidsubstrat abgeschieden wird, wobei ein Dickenverhältnis zwischen der Dicke des monokristallinen Aluminiumoxidsubstrats und der Zwischenschicht 100:1, vorzugsweise 1000:1, übersteigt.

4. Lichtquelle nach einem der vorstehenden Ansprüche, wobei der geschlossene Wellenleiter, der Eingangswellenleiter und/oder der Ausgangswellenleiter ein Stegwellenleiter ist; und/oder
wobei mindestens einer der Eingangswellenleiter und der Ausgangswellenleiter ein Siliziumnitrid-Wellenleiter ist, der während des gleichen Prozesses wie der Siliziumnitrid-Wellenleiter des geschlossenen Wellenleiters gebildet wird; und/oder
wobei der Eingangswellenleiter und der Ausgangswellenleiter Teil desselben Wellenleiters sind, oder wobei der Eingangswellenleiter und der Ausgangswellenleiter auf verschiedenen und vorzugsweise gegenüberliegenden Seiten des geschlossenen Wellenleiters angeordnet sind.

5. Verfahren zum Herstellen des optischen Resonators nach einem der Ansprüche 1 bis 4, wobei das Verfahren umfasst:
Bereitstellen eines monokristallinen Aluminiumoxidsubstrats;
Abscheiden eines monolithischen Siliziumnitridfilms mit einer Dicke von mindestens 500 nm auf dem Substrat in einem einstufigen chemischen Niederdruckgasphasenabscheidungsprozess (LPCVD) bei einer Temperatur zwischen 750 und 950 °C;
Bereitstellen einer Maskierungsschicht auf dem abgeschiedenen Siliziumnitridfilm;
Strukturieren der Maskierungsschicht;
Ätzen des Siliziumnitridfilms unter Verwendung der gemusterten Maskierungsschicht, um dadurch mindestens den geschlossenen Wellenleiter und vorzugsweise den Eingangswellenleiter, den Ausgangswellenleiter und den geschlossenen Wellenleiter zu bilden.

6. Verfahren nach Anspruch 5, wobei die abgeschiedene Siliziumnitridschicht eine Dicke von 750 nm oder mehr, vorzugsweise 1 um oder mehr und noch bevorzugter 1,5 um oder mehr aufweist; und/oder
wobei die Siliziumnitridschicht, Si_{X}N_{Y}, eine Zusammensetzung aufweist, in der 0,71 <= (X/Y) <= 0,76; und/oder
wobei das monokristalline Aluminiumoxidsubstrat ein Saphirsubstrat umfasst.

7. Optischer Schalter mit mikroelektromechanischem System (MEMS), umfassend:
ein monokristallines Aluminiumoxidsubstrat;
einen monolithischen optischen Siliziumnitrid-Wellenleiter mit einer Dicke von 500 nm oder mehr, der auf dem Substrat abgeschieden ist, wobei der optische Wellenleiter umfasst:
ein auf dem Substrat aufgebrachtes Basisteil, wobei die erste Basis zum Empfangen eines Lichtstrahls konfiguriert ist, und
ein aufgehängtes Teil mit einem ersten Ende, an dem das aufgehängte Teil integral mit dem Basisteil verbunden ist, und einem zweiten Ende, das zum Aussenden des Lichtstrahls konfiguriert ist;
eine Lichtempfangseinheit, die einen optischen Wellenleiter umfasst;
einen Aktuator, der konfiguriert ist, um das zweite Ende relativ zur Lichtempfangseinheit als Reaktion auf ein Betätigungssignal zu verschieben, um dem vom zweiten Ende emittierten Lichtstrahl zu ermöglichen oder zu verhindern, dass er in den optischen Wellenleiter der Lichtempfangseinheit eintritt.

8. Optischer MEMS-Schalter nach Anspruch 7, wobei die Lichtempfangseinheit eine Vielzahl von optischen Wellenleitern umfasst, wobei der Aktuator konfiguriert ist, um als Reaktion auf das Betätigungssignal einen optischen Wellenleiter aus der Vielzahl von optischen Wellenleitern auszuwählen, in den der vom zweiten Ende emittierte Lichtstrahl eintreten kann; und/oder
wobei der Aktuator konfiguriert ist, um den aufgehängten Teil als Reaktion auf das Betätigungssignal zu biegen, wobei der Aktuator vorzugsweise konfiguriert ist, um den aufgehängten Teil zu biegen und dadurch das zweite Ende in eine Richtung parallel zum Substrat und/oder in eine Richtung senkrecht zum Substrat zu verschieben.

9. Optischer MEMS-Schalter nach einem der Ansprüche 7 bis 8, wobei der Aktuator ein elektrostatischer Aktuator ist, der eine nicht aufgehängte Elektrode, die fest mit dem Substrat verbunden ist, und eine aufgehängte Elektrode umfasst, wobei ein Abstand zwischen der aufgehängten Elektrode und der nicht aufgehängten Elektrode durch Anlegen eines elektrischen Betätigungssignals an die Elektroden geändert werden kann, und wobei die aufgehängte Elektrode mechanisch mit dem aufgehängten Teil gekoppelt ist;
wobei die aufgehängte Elektrode und die nicht aufgehängte Elektrode vorzugsweise jeweils unter Verwendung einer oder mehrerer leitfähiger Schichten gebildet werden, wobei die eine oder mehreren leitfähigen Schichten der aufgehängten Elektrode noch bevorzugter auf dem aufgehängten Teil gebildet werden, wobei der optische MEMS-Schalter noch bevorzugter ferner eine Mantelschicht umfasst, die zwischen dem optischen Siliziumnitrid-Wellenleiter des aufgehängten Teils und der einen oder mehreren leitfähigen Schicht(en) der aufgehängten Elektrode angeordnet ist; und/oder
wobei der optische MEMS-Schalter ferner einen Stützbalken umfasst, der die aufgehängte Elektrode mechanisch mit dem aufgehängten Teil koppelt, und/oder der optische MEMS-Schalter ferner aufgehängte Federn umfasst, deren eines Ende fest mit dem Substrat und das andere Ende mit der aufgehängten Elektrode verbunden ist, wobei die Federn und/oder der Stützbalken vorzugsweise jeweils unter Verwendung derselben Siliziumnitridschicht gebildet werden wie die Siliziumnitridschicht, die zur Bildung des optischen Siliziumnitrid-Wellenleiters verwendet wird.

10. System, das den optischen MEMS-Schalter nach einem der Ansprüche 7 bis 9 und eine Laserquelle umfasst, die zum Erzeugen eines Laserstrahls konfiguriert ist und so mit dem optischen MEMS-Schalter angeordnet ist, dass der erzeugte Strahl in den Basisteil des Siliziumnitrid-Wellenleiters eintritt.

11. Sensor, umfassend:
ein monokristallines Aluminiumoxidsubstrat;
ein Sensorelement, das eine aufgehängte Siliziumnitridstruktur umfasst, von der mindestens ein Ende fest mit dem Substrat verbunden ist; und
eine Sensoreinheit zum Erfassen einer Biegung des Sensorelements;
wobei die aufgehängte Siliziumnitridstruktur durch Abscheidung eines monolithischen Siliziumnitridfilms auf dem Substrat realisiert wird, wobei der Film eine Dicke von 500 nm oder mehr aufweist.

12. Sensor nach Anspruch 11, der ferner ein Einfangmittel oder eine Beschichtung zum Einfangen von Partikeln und/oder Molekülen von mindestens 100 Dalton, wie beispielsweise bestimmten Proteinen, DNA, ionischen Verbindungen, Bakterien oder Viren, umfasst.

13. Sensor nach einem der Ansprüche 11 bis 12, der ferner einen ersten Körper und einen zweiten Körper umfasst, der vom ersten Körper beabstandet ist, wobei der erste und der zweite Körper jeweils aus einer Opferschicht bestehen, wobei das Sensorelement ein erstes und ein zweites Basisteil umfasst, die auf dem ersten bzw. zweiten Körper angeordnet sind, und das aufgehängte Teil sich zwischen dem ersten und dem zweiten Basisteil erstreckt, wobei vorzugsweise nur ein Segment des ersten und des zweiten Basisteils auf dem ersten bzw. dem zweiten Körper angeordnet ist und ein verbleibendes Segment des ersten und des zweiten Basisteils direkt auf dem Substrat angeordnet ist; oder
wobei der Sensor ferner eine Aussparung oder ein Durchgangsloch durch das Substrat umfasst, das unterhalb der aufgehängten Siliziumnitridstruktur angeordnet ist.

14. Sensor nach Anspruch 11, wobei das Sensorelement konfiguriert ist, um eine Änderung der elektrischen Eigenschaften in Abhängigkeit von einer Biegung des Sensorelements anzuzeigen, und wobei die Sensoreinheit eine Verarbeitungseinheit umfasst, die zum Messen der elektrischen Eigenschaften des Sensorelements konfiguriert ist;
wobei das Sensorelement vorzugsweise einen Dehnungsmessstreifen umfasst;
wobei der Sensor vorzugsweise ein Beschleunigungsmesser ist.

15. Verfahren zum Herstellen einer aufgehängten Siliziumnitridstruktur, umfassend:
Bereitstellen eines monokristallinen Aluminiumoxidsubstrats;
Abscheiden einer Opferschicht auf dem Substrat, wobei die Opferschicht Opfermaterial umfasst;
Bereitstellen einer ersten Maskierungsschicht auf der abgeschiedenen Opferschicht;
Strukturieren der ersten Maskierungsschicht;
Ätzen der Opferschicht unter Verwendung der strukturierten ersten Maskierungsschicht, um dadurch einen Körper aus dem Opfermaterial zu bilden;
Abscheiden eines monolithischen Siliziumnitridfilms mit einer Dicke von mindestens 500 nm auf dem Substrat und dem Körper aus Opfermaterial in einem einstufigen Schritt der chemischen Niederdruckgasphasenabscheidung (LPCVD) bei einer Temperatur zwischen 750 und 950 °C;
Bereitstellen einer zweiten Maskierungsschicht auf dem abgeschiedenen Siliziumnitridfilm;
Strukturieren der zweiten Maskierungsschicht;
Ätzen des Siliziumnitridfilms unter Verwendung der strukturierten zweiten Maskierungsschicht, um dadurch die Siliziumnitridstruktur zu bilden; und
Ätzen des Körpers aus Opfermaterial, um dadurch die Aufhängung der Siliziumnitridstruktur zu ermöglichen.

## Revendications

1. Source de lumière permettant de générer un peigne de fréquences optiques, comprenant :
un résonateur optique, comprenant :
un substrat d'oxyde d'aluminium monocristallin ;
un guide d'ondes d'entrée ;
un guide d'ondes de sortie ;
un guide d'ondes en boucle fermée disposé sur le substrat, et couplé optiquement au guide d'ondes d'entrée et au guide d'ondes de sortie, dans laquelle le guide d'ondes en boucle fermée est configuré pour :
recevoir au moins une partie d'un faisceau de lumière provenant du guide d'ondes d'entrée ;
accumuler l'énergie optique à l'intérieur du guide d'ondes en boucle fermée à l'aide du faisceau de lumière reçu ;
générer un peigne de fréquences optiques à l'aide de l'énergie optique accumulée ;
coupler au moins une partie du peigne de fréquences optiques généré au guide d'ondes de sortie ;
dans laquelle le guide d'ondes en boucle fermée est un guide d'ondes monolithique en nitrure de silicium ayant une épaisseur égale ou supérieure à 500 nm, et qui est déposé sur le substrat.

2. Source de lumière selon la revendication 1, comprenant en outre une source laser permettant de transmettre un faisceau de lumière dans le guide d'ondes d'entrée ;
dans laquelle la source laser est de préférence un laser à ondes continues, et/ou dans laquelle la source laser est de préférence configurée pour générer un faisceau de lumière à une première fréquence, dans laquelle le guide d'ondes en boucle fermée est configuré pour générer ledit peigne de fréquences afin d'avoir des composantes de fréquences disposées de manière équidistante autour de la première fréquence ;
dans laquelle le guide d'ondes en boucle fermée est de préférence configuré pour générer un peigne de fréquences optiques Kerr.

3. Source de lumière selon l'une quelconque des revendications précédentes, dans laquelle le guide d'ondes en nitrure de silicium a une épaisseur égale ou supérieure à 750 nm, de préférence égale ou supérieure à 1 µm, et plus préférablement égale ou supérieure à 1,5 µm ; et/ou
dans laquelle le guide d'ondes en nitrure de silicium comprend une couche de Si_{X}N_{Y}, dans laquelle 0,71 <= (X/Y) <= 0,76 ; et/ou
dans laquelle le substrat d'oxyde d'aluminium monocristallin comprend un substrat de saphir ; et/ou
dans laquelle le guide d'ondes en nitrure de silicium monolithique est déposé directement sur le substrat d'oxyde d'aluminium monocristallin, ou dans laquelle le guide d'ondes en nitrure de silicium monolithique est déposé sur le substrat d'oxyde d'aluminium monocristallin par le biais d'une couche intermédiaire, dans laquelle un rapport d'épaisseur entre l'épaisseur du substrat d'oxyde d'aluminium monocristallin et la couche intermédiaire dépasse 100:1, et plus préférablement 1000:1.

4. Source de lumière selon l'une quelconque des revendications précédentes, dans laquelle le guide d'ondes en boucle fermée, le guide d'ondes d'entrée et/ou le guide d'ondes de sortie, sont un guide d'ondes à moulure ; et/ou
dans laquelle au moins l'un du guide d'ondes d'entrée et du guide d'ondes de sortie est un guide d'ondes en nitrure de silicium formé au cours du même processus que le guide d'ondes en nitrure de silicium du guide d'ondes en boucle fermée ; et/ou
dans laquelle le guide d'ondes d'entrée et le guide d'ondes de sortie font partie d'un même guide d'ondes, ou dans laquelle le guide d'ondes d'entrée et le guide d'ondes de sortie sont disposés sur des côtés différents et de préférence opposés du guide d'ondes en boucle fermée.

5. Procédé de fabrication du résonateur optique selon l'une quelconque des revendications 1 à 4, comprenant :
la fourniture d'un substrat d'oxyde d'aluminium monocristallin ;
le dépôt d'un film en nitrure de silicium monolithique d'au moins 500 nm d'épaisseur sur le substrat par un procédé de dépôt chimique en phase vapeur à basse pression, LPCVD, en une seule étape à une température entre 750 et 950 °C ;
la fourniture d'une couche de masquage sur le dessus du film en nitrure de silicium déposé ;
la formation de motifs sur la couche de masquage ;
la gravure du film en nitrure de silicium à l'aide de la couche de masquage à motifs pour former de ce fait au moins le guide d'ondes en boucle fermée, et de préférence tous, parmi le guide d'ondes d'entrée, le guide d'ondes de sortie, et le guide d'ondes en boucle fermée.

6. Procédé selon la revendication 5, dans lequel la couche en nitrure de silicium déposée a une épaisseur égale ou supérieure à 750 nm, de préférence égale ou supérieure à 1 µm, et plus préférablement supérieure ou égale à 1,5 µm ; et/ou
dans lequel la couche en nitrure de silicium, Si_{X}N_{Y}, a une composition dans laquelle 0,71 <= (X/Y) <= 0,76 ; et/ou
dans lequel le substrat d'oxyde d'aluminium monocristallin comprend un substrat en saphir.

7. Commutateur optique à système microélectromécanique (MEMS), comprenant :
un substrat d'oxyde d'aluminium monocristallin ;
un guide d'ondes optiques en nitrure de silicium monolithique ayant une épaisseur égale ou supérieure à 500 nm, et qui est déposé sur le substrat, ledit guide d'ondes optiques comprenant :
une partie de base déposée sur le substrat, dans lequel la première base est configurée pour recevoir un faisceau de lumière, et
une partie suspendue ayant une première extrémité au niveau de laquelle la partie suspendue est intégralement reliée à la partie de base et une seconde extrémité configurée pour émettre ledit faisceau de lumière ;
une unité de réception de lumière comprenant un guide d'ondes optiques ;
un actionneur configuré pour déplacer la seconde extrémité par rapport à l'unité de réception de lumière en réponse à un signal d'actionnement afin de permettre ou d'empêcher le faisceau de lumière émis par la seconde extrémité de pénétrer dans le guide d'ondes optiques de l'unité de réception de lumière.

8. Commutateur optique MEMS selon la revendication 7, dans lequel l'unité de réception de lumière comprend une pluralité de guides d'ondes optiques, dans lequel l'actionneur est configuré pour, en réponse au signal d'actionnement, sélectionner un guide d'ondes optiques dans la pluralité de guides d'ondes optiques dans laquelle le faisceau de lumière émis par la seconde extrémité est autorisé à entrer ; et/ou
dans lequel l'actionneur est configuré pour fléchir la partie suspendue en réponse au signal d'actionnement, dans lequel l'actionneur est de préférence configuré pour fléchir la partie suspendue et déplacer de ce fait la seconde extrémité dans une direction parallèle au substrat et/ou dans une direction perpendiculaire au substrat.

9. Commutateur optique MEMS selon l'une quelconque des revendications 7 à 8, dans lequel l'actionneur est un actionneur électrostatique comprenant une électrode non suspendue qui est reliée à demeure au substrat et une électrode suspendue, dans lequel un espacement entre l'électrode suspendue et l'électrode non suspendue peut être modifié en appliquant un signal d'actionnement électrique aux électrodes, et dans lequel l'électrode suspendue est accouplée mécaniquement à la partie suspendue ;
dans lequel l'électrode suspendue et l'électrode non suspendue sont de préférence formées chacune d'une ou de plusieurs couches conductrices, dans lequel la ou les couches conductrices de l'électrode suspendue sont plus préférablement formées sur la partie suspendue, le commutateur optique MEMS comprenant en outre encore plus préférablement une couche de placage disposée entre le guide d'ondes optique en nitrure de silicium de la partie suspendue et la ou les couches conductrices de l'électrode suspendue ; et/ou
dans lequel le commutateur optique MEMS comprend en outre une barre de support qui accouple mécaniquement l'électrode suspendue à la partie suspendue et/ou le commutateur optique MEMS comprend en outre des ressorts suspendus ayant une extrémité reliée à demeure au substrat et une autre extrémité à l'électrode suspendue, dans lequel les ressorts et/ou la barre de support sont de préférence formés à l'aide de la même couche en nitrure de silicium que la couche en nitrure de silicium utilisée pour former le guide d'ondes optiques en nitrure de silicium.

10. Système, comprenant le commutateur optique MEMS selon l'une quelconque des revendications 7 à 9, et une source laser configurée pour générer un faisceau laser et disposée mutuellement avec le commutateur optique MEMS de telle sorte que le faisceau généré pénètre dans la partie de base du guide d'ondes en nitrure de silicium.

11. Capteur, comprenant :
un substrat d'oxyde d'aluminium monocristallin ;
un élément de détection comprenant une structure en nitrure de silicium suspendue ayant au moins une extrémité reliée à demeure au substrat ; et
une unité de détection permettant de détecter une flexion de l'élément de détection ;
dans lequel la structure en nitrure de silicium suspendue est réalisée à l'aide du dépôt d'un film en nitrure de silicium monolithique sur le substrat, ledit film ayant une épaisseur égale ou supérieure à 500 nm.

12. Capteur selon la revendication 11, comprenant en outre un agent de capture ou une couche de revêtement pour capturer des particules et/ou des molécules d'au moins 100 Dalton, telles que des protéines particulières, de l'ADN, des composés ioniques, des bactéries ou des virus.

13. Capteur selon l'une quelconque des revendications 11 à 12, comprenant en outre un premier corps et un second corps espacé du premier corps, le premier et le second corps étant chacun constitués d'une couche sacrificielle, dans lequel l'élément de détection comprend une première et une seconde partie de base disposées sur le premier et le second corps, respectivement, et la partie suspendue s'étendant entre les première et seconde parties de base, dans lequel de préférence seul un segment des première et seconde parties de base est disposé sur les premier et second corps, respectivement, un segment restant des première et seconde parties de base étant disposé directement sur le substrat ; ou
le capteur comprenant en outre l'un d'une cavité dans ou d'un trou traversant à travers le substrat disposé sous la structure en nitrure de silicium suspendue.

14. Capteur selon la revendication 11, dans lequel l'élément de détection est configuré pour afficher un changement dans les caractéristiques électriques en fonction d'une flexion de l'élément de détection, et dans lequel l'unité de détection comprend une unité de traitement configurée pour mesurer les caractéristiques électriques de l'élément de détection ;
dans lequel l'élément de détection comprend de préférence une jauge de contrainte ;
dans lequel le capteur est de préférence un accéléromètre.

15. Procédé de fabrication d'une structure en nitrure de silicium suspendue, comprenant :
la fourniture d'un substrat d'oxyde d'aluminium monocristallin ;
le dépôt d'une couche sacrificielle sur le substrat, la couche sacrificielle comprenant un matériau sacrificiel ;
la fourniture d'une première couche de masquage sur le dessus de la couche sacrificielle déposée ;
la formation de motifs sur la première couche de masquage ;
la gravure de la couche sacrificielle à l'aide de la première couche de masquage à motifs pour former de ce fait un corps dudit matériau sacrificiel ;
le dépôt d'un film en nitrure de silicium monolithique d'au moins 500 nm d'épaisseur sur le substrat et du corps de matériau sacrificiel par un procédé de dépôt chimique en phase vapeur à basse pression, LPCVD, en une seule étape à une température entre 750 et 950 °C ;
la fourniture d'une seconde couche de masquage sur le dessus du film en nitrure de silicium déposé ;
la formation de motifs sur la seconde couche de masquage ;
la gravure du film en nitrure de silicium à l'aide de la seconde couche de masquage à motifs pour former de ce fait la structure en nitrure de silicium ; et
la gravure du corps de matériau sacrificiel pour permettre de ce fait que la structure en nitrure de silicium soit suspendue.
